# EUROPEAN PATENT APPLICATION

(11) **EP 2 840 476 A1**
(43) Date of publication of application: **25.02.2015**
(21) Application number: 14179364.6
(22) Date of filing: 31.07.2014
(51) Int. Cl.: G06F 3/0482

(54) **Persistent computer user interface menu**

(30) Priority: 23.08.2013 JP 2013173648
(71) Applicant: FUJITSU LIMITED, Kawasaki-shi, Kanagawa 211-8588 (JP)
(72) Inventor: Tsumura, Ryuuta, Kawasaki-shi, Kanagawa 211-8588 (JP); Akama, Katsuaki, Kawasaki-shi, Kanagawa 211-8588 (JP)
(74) Representative: Cooper-Rolfe, Elizabeth Louise

(57) **Abstract**

An electronic device includes a display unit that display a menu, a determination unit that determine whether or not a menu item selected from among the menu items included in the menu defines that the menu continues to be displayed when the menu item is selected, a maintenance unit that maintain a state in which the menu is displayed when the determination unit determines that the selected menu item defines that the menu continues to be displayed, and a deletion unit that deletes the displayed menu when the determination unit determines that the selected menu item defines that the menu does not continue to be displayed.

## Description

### FIELD

The present disclosure discussed herein is related to a technique for controlling a menu.

### BACKGROUND

An electronic device may use a menu in order to receive an instruction from a user.

For example, a menu that is used to activate application programs is referred to as a launcher. The launcher is displayed on a screen when being called and is deleted from the screen when any of application icons is selected in many cases. The menu that is temporarily used is deleted immediately after a menu item such as an icon is selected.

However, a user may cause the electronic device to repeatedly execute a process depending on details of the process activated in accordance with an instruction from the user. Those techniques are described in, for example, Japanese Laid-open Patent Publication No. 2010-160564.

### SUMMARY

It is desirable to enable a certain menu item of a menu, which is temporarily used, to be continuously selected.

According to an aspect of the invention, an electronic device includes a display unit operable to display a menu, a determination unit operable to determine whether or not a menu item selected from among menu items included in the menu defines that the menu continues to be displayed when the menu item is selected, a maintenance unit operable to maintain a state in which the menu is displayed when the determination unit determines that the selected menu item defines that the menu continues to be displayed, and a deletion unit operable to delete the displayed menu when the determination unit determines that the selected menu item defines that the menu does not continue to be displayed.

### BRIEF DESCRIPTION OF DRAWINGS

FIG. 1 is a diagram illustrating an example of a screen in a state in which a main menu is displayed;
FIG. 2 is a diagram illustrating a case in which a user's finger is released from a region other than application icons;
FIG. 3 is a diagram illustrating a case in which the user's finger is released from an application icon;
FIG. 4 is a diagram illustrating an example of the screen in a state in which a submenu is displayed;
FIG. 5 is a diagram illustrating a case in which the user's finger is released from a functional icon;
FIG. 6 is a diagram illustrating a case in which the user's finger is released from a functional icon;
FIG. 7 is a diagram illustrating an example of the screen in a state in which the main menu and the submenu are not deleted;
FIG. 8 is a diagram illustrating a case in which a functional icon is touched;
FIG. 9 is a diagram illustrating a case in which a functional icon is touched;
FIG. 10 is a diagram illustrating an example of a hardware configuration of a mobile terminal device;
FIG. 11 is a diagram illustrating an example of functional blocks of the mobile terminal device;
FIG. 12 is a diagram illustrating an example of a main menu table;
FIG. 13 is a diagram illustrating an example of a submenu table;
FIG. 14 is a flowchart of a menu process;
FIG. 15 is a flowchart of a main menu process;
FIG. 16 is a flowchart of the main menu process;
FIG. 17 is a flowchart of a submenu process; and
FIG. 18 is a flowchart of the submenu process.

### DESCRIPTION OF EMBODIMENT

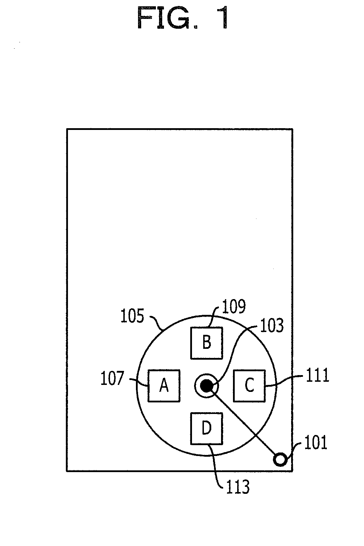

An embodiment is related to control of a menu. Hereinafter, transition of a menu screen according to the embodiment is described with reference to FIGs. 1 to 9. FIGs. 1 to 9 illustrate examples of the screen of a mobile terminal device provided with a touch panel. In the embodiment, a main menu and submenus are used. The main menu is initially displayed. The submenus correspond to main menu items included in the main menu. The menus that are described in the examples are launchers to be used to activate application programs.

First, the embodiment describes a case in which the main menu is called. FIG. 1 illustrates an example of the screen in a state in which the main menu is displayed. In this example, the main menu is displayed by touching a lower right end portion of the screen with a finger and sliding the finger in contact with the screen in a direction toward an upper left end portion of the screen. A point 101 represents a position at which a user touches the screen. A point 103 represents a position to which the user slides the user's finger. When the user slides the user's finger from the point 101 to the point 103, the main menu 105 is displayed.

Regardless of an operational state, when this operation is performed, the main menu is displayed. Thus, an application program may be easily activated at any time.

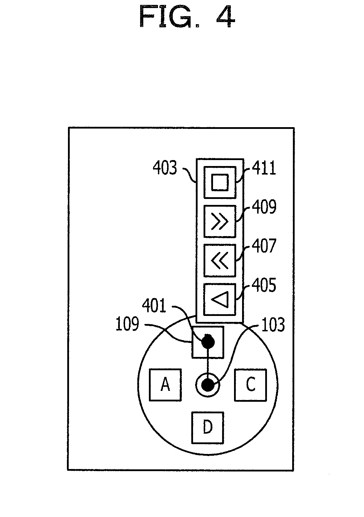

In this example, the main menu 105 includes four menu items. Specifically, application icons 107, 109, 111, and 113 correspond to the menu items. The menu items of the main menu are referred to as main menu items in some cases in order to distinguish the menu items of the main menu from menu items of the submenus described later. In addition, the menu items of the submenus are referred to as submenu items in some cases. The submenus and the submenu items are described later with reference to FIG. 4 and the like.

The application icon 107 is an icon for receiving an instruction to activate an application program with a name "aaa". The application icon 109 is an icon for receiving an instruction to activate an application program with a name "bbb". The application icon 111 is an icon for receiving an instruction to activate an application program with a name "ccc". The application icon 113 is an icon for receiving an instruction to activate an application program with a name "ddd".

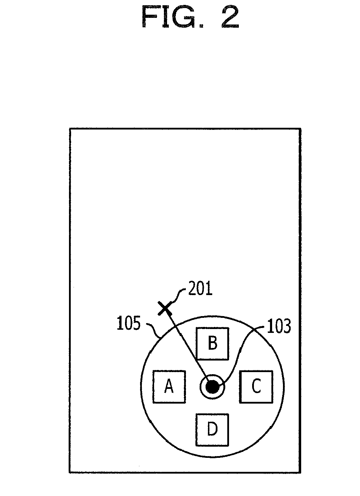

Next, an operation when the user slides the finger on the screen from the state illustrated in FIG. 1 is described. FIG. 2 illustrates a case in which the user releases the finger from a region other than the application icons. FIG. 2 illustrates the case in which the user slides the finger on the screen from the point 103 to a point 201 and releases the finger from the screen at the point 201. When the finger is released from the screen at the point 201, the main menu 105 is closed and the screen returns to the original state. In this case, the application programs "aaa", "bbb", "ccc", and "ddd" are not activated.

When the user releases the finger from the screen at a point other than the application icons 107 to 113, the application programs are not activated and the main menu is closed.

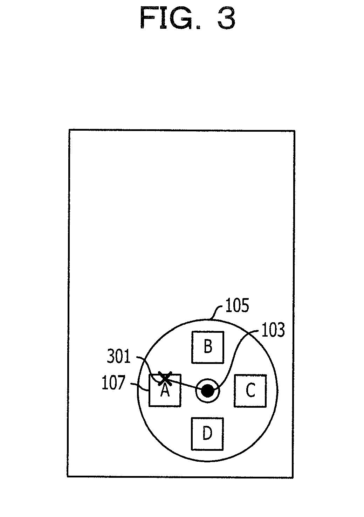

Next, an operation when the user slides the finger to any of the application icons on the screen is described. FIG. 3 illustrates a case in which the user slides the finger on the screen from the state illustrated in FIG. 1 so as to move the finger from the point 103 to a point 301 and releases the finger from the screen at the point 301. It is assumed that the main menu item that corresponds to the application icon 107 does not have a submenu.

When the user performs the operation in the aforementioned manner, an application program that corresponds to the application icon from which the finger is released is activated. In an example illustrated in FIG. 3, the application program "aaa" that corresponds to the application icon 107 is activated. Then, the main menu 105 is closed.

In the example illustrated in FIG. 3, since the main menu item that corresponds to the application icon 107 does not have a submenu, a submenu is not displayed and the application program is immediately activated.

Next, an operation that causes a submenu to be displayed is described. FIG. 4 illustrates a case in which the user slides the finger on the screen from the state illustrated in FIG. 1 so as to move the finger from the point 103 to a point 401. It is assumed that the main menu item that corresponds to the application icon 109 has a submenu.

When the user performs the operation in the aforementioned manner, the submenu 403 of the main menu item corresponding to the application icon 109 is displayed. The submenu 403 includes four menu items. Specifically, functional icons 405, 407, 409, and 411 illustrated in FIG. 4 correspond to the menu items of the submenu 403. The menu items of the submenu are referred to as submenu items in order to distinguish the menu items of the submenus from the main menu items in some cases, as described above. The functional icons 405 to 411 correspond to functions included in the application program "bbb" corresponding to the application icon 109. It is assumed that the application program "bbb" is a music reproduction program. The functional icon 405 corresponds to a "reproduction" function of the music reproduction program. The functional icon 407 corresponds to a "next tune selection" function of the music reproduction program. The functional icon 409 corresponds to a "previous tune selection" function of the music reproduction program. The functional icon 411 corresponds to a "stop" function of the music reproduction program.

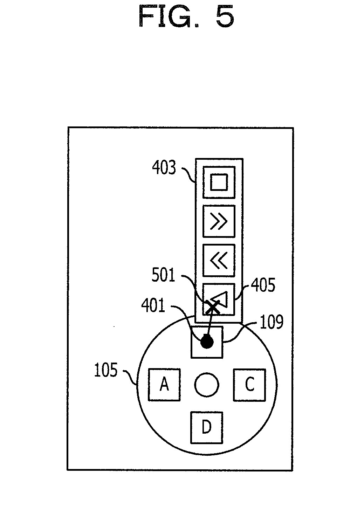

Next, an operation when a submenu item is selected is described. FIG. 5 illustrates a case in which the user slides the finger on the screen from the state illustrated in FIG. 4 so as to move the finger from the point 401 to a point 501 and releases the finger from the screen at the point 501. It is assumed that after the submenu item that corresponds to the functional icon 405 is selected, the submenu item that corresponds to the functional icon 405 does not cause the main menu and the submenu to continue to be displayed.

When the user performs the operation in the aforementioned manner, the function that corresponds to the functional icon from which the finger is released is activated. Specifically, the "reproduction" function that is among the functions included in the music reproduction program "bbb" corresponding to the application icon 109 and corresponds to the functional icon 405 is called. Then, the main menu 105 and the submenu 403 are closed.

The music reproduction program "bbb" reproduces, in response to a call, a musical file (for example, a top musical file in an initial state) to be first reproduced.

From a perspective of a characteristic of the "reproduction" function of the music reproduction program, it is hardly expected to call the "reproduction" function after a call of the "reproduction" function. It is, therefore, sufficient if the submenu item that corresponds to the functional icon 405 corresponding to the "reproduction" function is selected once.

When a submenu item that is not continuously selected in general is selected, an interested function is called and a menu process is immediately terminated.

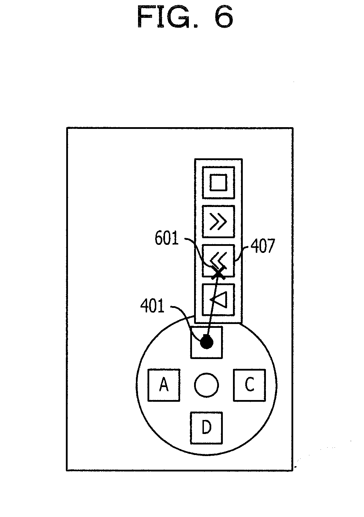

Next, an operation when a submenu item that may be continuously selected is selected is described. FIG. 6 illustrates a case in which the user slides the finger on the screen from the state illustrated in FIG. 4 so as to move the finger from the point 401 to a point 601 and releases the finger from the screen at the point 601. It is assumed that after the submenu item that corresponds to the functional icon 407 is selected, the submenu item that corresponds to the functional icon 407 causes the main menu and the submenu to continue to be displayed.

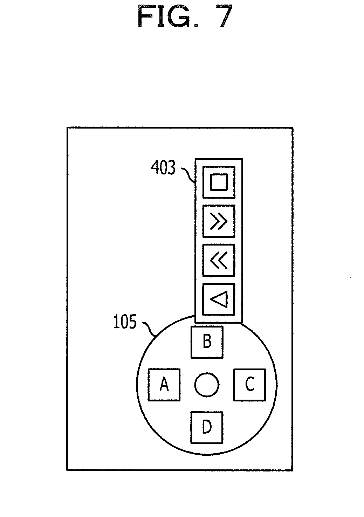

When the user performs the operation in the aforementioned manner, the function that corresponds to the functional icon from which the finger is released is activated. In an example illustrated in FIG. 6, the "next tune selection" function" that is among the functions included in the music reproduction program "bbb" corresponding to the application icon 109 and corresponds to the functional icon 407 is called. In this case, the main menu 105 and the submenu 403 are not closed. Thus, the screen becomes a state illustrated in FIG. 7. In this case, the user's finger is not in contact with the screen.

The music reproduction program "bbb" increments, by 1, the order that a file is to be reproduced in response to a call of the "next tune selection" function. From a perspective of a characteristic of the "next tune selection" function of the music reproduction program, the order that a file is to be reproduced may be incremented by 2 or more at one time, and thus the submenu remains displayed.

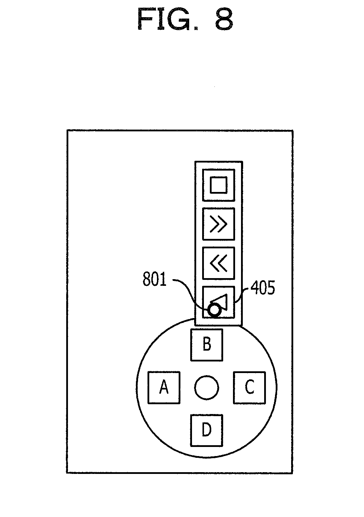

FIG. 8 illustrates a case in which the user touches a point 801 on the screen from the state illustrated in FIG. 7. An example illustrated in FIG. 8 assumes that second and later selections on the submenu are performed by touching functional icons.

In the example illustrated in FIG. 8, the "reproduction" function that corresponds to the functional icon 405 touched by the user is called. Then, the main menu 105 and the submenu 403 are closed.

The music reproduction program "bbb" reproduces, in response to a call of the "reproduction" function, a musical file that is to be first reproduced. For example, if it is assumed that the order that a file is to be reproduced is incremented by 1 from the top musical file by the operation described with reference to FIG. 6, the second musical file is reproduced.

As described above, since the submenu item that corresponds to the functional icon 405 is set so as not to cause the main menu and the submenu to continue to be displayed after the submenu item is selected, the mobile terminal device is operated in the same manner as the case illustrated in FIG. 5. Specifically, the main menu 105 and the submenu 403 are closed and the menu process is terminated in the example illustrated in FIG. 8.

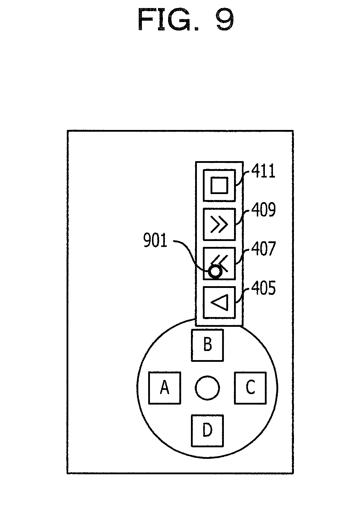

Lastly, an operation when the same submenu item is repeatedly selected is described. FIG. 9 illustrates a case in which the user touches the point 901 from the state illustrated in FIG. 7. The "next tune selection" function that corresponds to the functional icon 407 touched is called. In this case, the main menu 105 and the submenu 403 are not closed, like the case illustrated in FIG. 6. Then, the screen returns to the state illustrated in FIG. 7.

The music reproduction program "bbb" increments, by 1, the order that a file is to be reproduced in response to a call of the "next tune selection" function. In this manner, the user may repeatedly select the functional icon 407.

The functional icon 411 corresponds to the "stop" function and is not repeatedly selected, like the functional icon 405. The functional icon 409 corresponds to the "previous tune selection" function and may be selected multiple times, like the functional icon 407. The description of the transition of the menu screen according to the embodiment is finished.

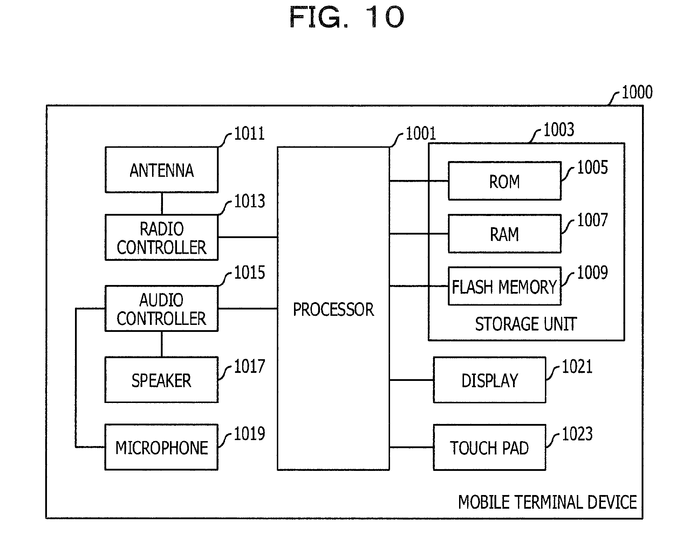

Next, a hardware configuration of the mobile terminal device is described. FIG. 10 illustrates an example of the hardware configuration of the mobile terminal device. A mobile terminal device 1000 includes a processor 1001, a storage unit 1003, an antenna 1011, a radio controller 1013, an audio controller 1015, a speaker 1017, a microphone 1019, a display 1021, and a touch pad 1023.

The processor 1001 may include a modem central processing unit (CPU) and an application CPU. The storage unit 1003 includes a read only memory (ROM) 1005, a random access memory (RAM) 1007, and a flash memory 1009, for example. The ROM 1005 has stored therein data and a program, for example. The RAM 1007 includes a region into which a program such as an application and data are loaded. The RAM 1007 includes a region for temporarily storing data such as screen data. The flash memory 1009 has stored therein an operating system and a program such as an application, for example.

The touch pad 1023 is a panel-shaped sensor arranged on a display screen of the display 1021 and is configured to receive an instruction by a touch operation, for example. The display 1021 displays various screens generated by applications and the aforementioned menus, for example. Specifically, the display 1021 and the touch pad 1023 are used as a unified touch panel. A touch event is generated by touching the touch pad 1023. A key may be provided as well as the touch pad 1023 in the mobile terminal device 1000.

The antenna 1011 receives cellular radio data. The radio controller 1013 controls radio communication. Audio communication for telephones and data communication are executed by controlling the radio communication.

The audio controller 1015 converts analog audio data into digital audio data and converts digital audio data into analog audio data. The speaker 1017 outputs analog data as a sound. The microphone 1019 converts a sound into analog data.

The mobile terminal device 1000 is an example of an electronic device. The embodiment may be applied to an electronic device such as a smartphone, a tablet terminal, a personal computer, a game machine, an electronic dictionary, a remote controller, a controller, or the like. The electronic device may use a pointing device other than the touch pad 1023. For example, the electronic device may use a mouse. The description of the hardware configuration of the mobile terminal device 1000 is finished.

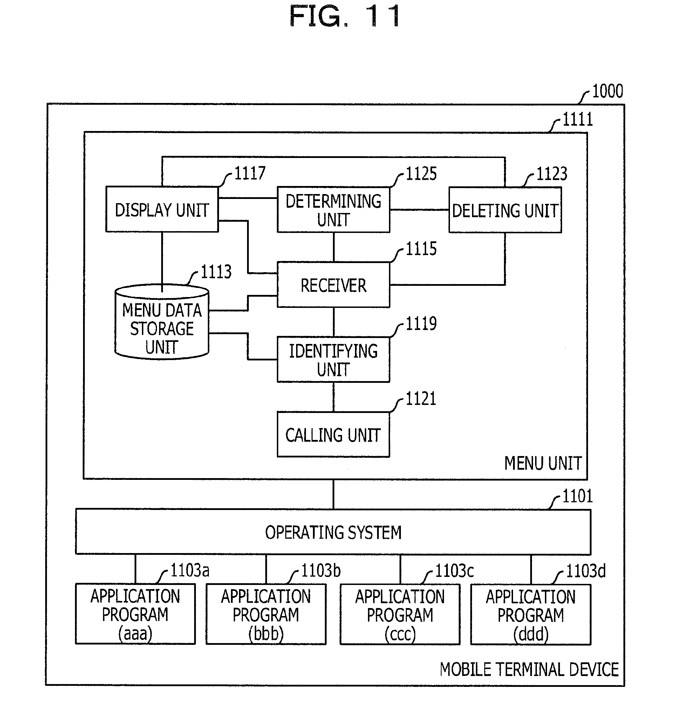

Next, functional blocks of the mobile terminal device 1000 are described. FIG. 11 illustrates an example of the functional blocks of the mobile terminal device 1000. The mobile terminal device 1000 includes an operating system 1101, application programs 1103, and a menu unit 1111.

When detecting an operation of calling the main menu, the operating system 1101 causes the menu unit 1111 to activate the menu process. For example, when detecting the operation described with reference to FIG. 1, the operating system 1101 calls the menu unit 1111.

In this example, the mobile terminal device 1000 includes an application program 1103a with a name "aaa", an application program 1103b with a name "bbb", an application program 1103c with a name "ccc", and an application program 1103d with a name "ddd".

The menu unit 1111 calls any of the application programs 1103a to 1103d in response to selection of a main menu item. The menu unit 1111 activates an application program 1103 through the operating system 1101, for example.

The application program 1103b separately executes the aforementioned "reproduction", "next tune selection", "previous tune selection", and "stop" functions in some cases. The menu unit 1111 separately calls the functions of the application program 1103b in response to selection of the submenu items. For example, the menu unit 1111 separately activates the functions of the application program 1103b through the operating system 1101.

The menu unit 1111 includes a menu data storage unit 1113, a receiver 1115, a display unit 1117, an identifying unit 1119, a calling unit 1121, a deleting unit 1123, and a determining unit 1125.

The menu data storage unit 1113 has stored therein a main menu table and submenu tables.

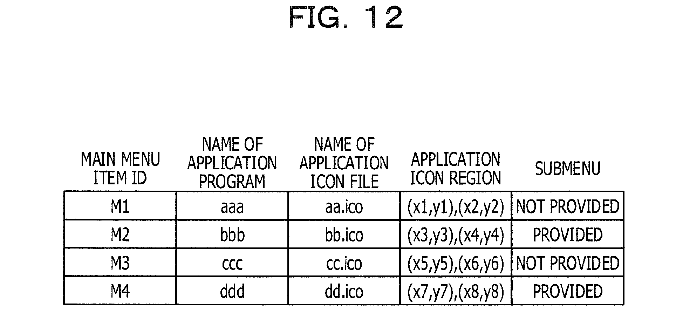

FIG. 12 illustrates an example of the main menu table. The main menu table includes records corresponding to the main menu items. The records have fields for main menu item IDs, the names of the application programs, the names of application icon files, application icon regions, and information representing whether or not a submenu is provided for each of the main menu items.

In the field for main menu item IDs, the IDs of the main menu items are set. In the field for the names of the application programs, the names of the application programs are set. In the field for the names of the application icon files, the names of the files storing image data of the application icons is set. In the field for the application icon regions, data that identifies the regions into which the application icons are loaded is set. In this example, coordinates of upper left ends of rectangular regions into which the application icons are loaded, and coordinates of lower right ends of the rectangular regions, are set. In the field for the information representing whether or not a submenu is provided for each of the main menu items, data that represents whether or not each of the main menu items has a submenu is set.

In a first record of the main menu table, data on a main menu item identified by an ID "M1" is set. The name of an application program corresponding to the main menu item identified by the ID "M1" is "aaa". The first record represents that the name of a file of an application icon identifying the application program "aaa" is "aa.ico" and the application icon is to be loaded into a rectangular region defined by coordinates (x₁, y₁) of an upper left end of the rectangular region and coordinates (x₂, y₂) of a lower right end of the rectangular region. The first record also represents that the main menu item does not have a submenu.

In a second record of the main menu table, data on a main menu item identified by an ID "M2" is set. The name of an application program corresponding to the main menu item identified by the ID "M2" is "bbb". The second record represents that the name of a file of an application icon identifying the application program "bbb" is "bb.ico" and the application icon is to be loaded into a rectangular region defined by coordinates (x₃, y₃) of an upper left end of the rectangular region and coordinates (x₄, y₄) of a lower right end of the rectangular region. The second record also represents that the main menu item has a submenu.

In a third record of the main menu table, data on a main menu item identified by an ID "M3" is set. The name of an application program corresponding to the main menu item identified by the ID "M3" is "ccc". The third record represents that the name of a file of an application icon identifying the application program "ccc" is "cc.ico" and the application icon is to be loaded into a rectangular region defined by coordinates (x₅, y₅) of an upper left end of the rectangular region and coordinates (x₆, y₆) of a lower right end of the rectangular region. The third record also represents that the main menu item does not have a submenu.

In a fourth record of the main menu table, data on a main menu item identified by an ID "M4" is set. The name of an application program corresponding to the main menu item identified by the ID "M4" is "ddd". The fourth record represents that the name of a file of an application icon identifying the application program "ddd" is "dd.ico" and the application icon is to be loaded into a rectangular region defined by coordinates (x₇, y₇) of an upper left end of the rectangular region and coordinates (x₈, y₈) of a lower right end of the rectangular region. The fourth record also represents that the main menu item has a submenu. The description of the main menu table is finished.

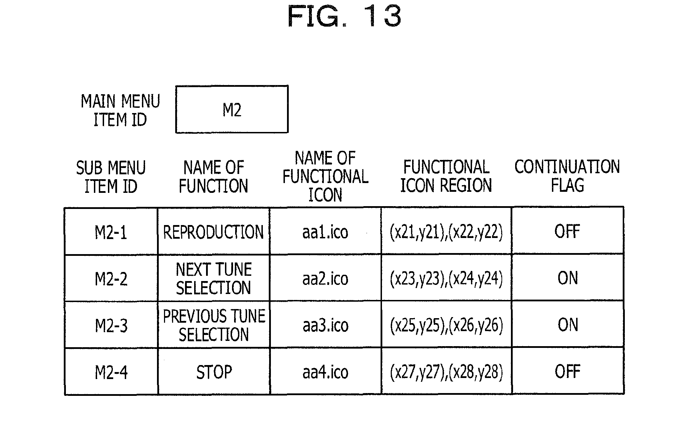

Next, the submenu tables are described. FIG. 13 illustrates an example of the submenu tables. The submenu tables are associated with the IDs of main menu items that call the submenus. A submenu table illustrated in the example is associated with the main menu item identified by the ID "M2".

The submenu table has records corresponding to submenu items. The records have fields for submenu item IDs, the names of functions, the names of functional icon files, functional icon regions, and continuation flags.

In the field for the submenu item IDs, the IDs of submenu items are set. In the field for the names of the functions, the names of the functions are set. In the field for the names of the functional icon files, the names of the files storing image data of functional icons are set. In the field for the functional icon regions, data that identifies the regions into which the functional icons are to be loaded is set. In this example, coordinates of upper left ends of rectangular regions into which the functional icons and coordinates of lower right ends of the rectangular regions are set. In the field for the continuation flags, data that represents whether or not the menu process is to be continuously executed after the submenu items are selected is set. If a continuation flag is set to "ON", the continuation flag represents that the menu process is to be continuously executed. If the menu process is to be continuously executed, display states of the menus are maintained. If the continuation flag is set to "OFF", the continuation flag represents that the menu process is not continuously executed. If the menu process is not continuously executed, the displayed menus are deleted.

In a first record of the submenu table, data on a submenu item identified by an ID "M2-1" is set. The name of a function corresponding to the submenu item identified by the ID "M2-1" is "reproduction". The first record represents that the name of a file of the functional icon identifying the "reproduction" function is "aa1.ico" and the functional icon is to be loaded into a rectangular region defined by coordinates (x₂₁, y₂₁) of an upper left end of the rectangular region and coordinates (x₂₂, y₂₂) of a lower right end of the rectangular region. The first record represents that the menu process is not continuously executed after the submenu item identified by the ID "M2-1" is selected.

In a second record of the submenu table, data on a submenu item identified by an ID "M2-2" is set. The name of a function corresponding to the submenu item identified by the ID "M2-2" is "next tune selection". The second record represents that the name of a file of the functional icon identifying the "next tune selection" function is "aa2.ico" and the functional icon is to be loaded into a rectangular region defined by coordinates (x₂₃, y₂₃) of an upper left end of the rectangular region and coordinates (x₂₄, y₂₄) of a lower right end of the rectangular region. The second record represents that the menu process is continuously executed after the submenu item identified by the ID "M2-2" is selected.

In a third record of the submenu table, data on a submenu item identified by an ID "M2-3" is set. The name of a function corresponding to the submenu item identified by the ID "M2-3" is "previous tune selection". The third record represents that the name of a file of the functional icon identifying the "previous tune selection" function is "aa3.ico" and the functional icon is to be loaded into a rectangular region defined by coordinates (x₂₅, y₂₅) of an upper left end of the rectangular region and coordinates (x₂₆, y₂₆) of a lower right end of the rectangular region. The third record represents that the menu process is continuously executed after the submenu item identified by the ID "M2-3" is selected.

In a fourth record of the submenu table, data on a submenu item identified by an ID "M2-4" is set. The name of a function corresponding to the submenu item identified by the ID "M2-4" is "stop". The fourth record represents that the name of a file of the functional icon identifying the "stop" function is "aa4.ico" and the functional icon is to be loaded into a rectangular region defined by coordinates (x₂₇, y₂₇) of an upper left end of the rectangular region and coordinates (x₂₈, y₂₈) of a lower right end of the rectangular region. The fourth record represents that the menu process is not continuously executed after the submenu item identified by the ID "M2-4" is selected. The description of the submenu table is finished.

Return to the description of FIG. 11. The receiver 1115 is configured to receive an instruction from the user. Specifically, the receiver 1115 is configured to acquire an event from the operating system 1101 and determine the instruction from the user. The display unit 1117 is configured to display the main menu and the submenus. The identifying unit 1119 is configured to identify an application program to be activated. The identifying unit 1119 is configured to identify a function to be activated. The calling unit 1121 is configured to call an application program to be activated. The calling unit 1121 is configured to call a function to be activated. The deleting unit 1123 is configured to delete the main menu and the submenus. The determining unit 1125 is configured to make a determination about control of the menu process.

The menu unit 1111, the menu data storage unit 1113, the receiver 1115, the display unit 1117, the identifying unit 1119, the calling unit 1121, the deleting unit 1123, and the determining unit 1125 are achieved by the hardware resources illustrated in FIG. 10, for example. A part or all of processes that are to be executed by the functional blocks, which are the menu unit 1111, the receiver 1115, the display unit 1117, the identifying unit 1119, the calling unit 1121, the deleting unit 1123, and the determining unit 1125, may be achieved by causing the processor 1001 to sequentially execute a program loaded in the storage unit 1003. The description of the functional blocks of the mobile terminal device 1000 is finished.

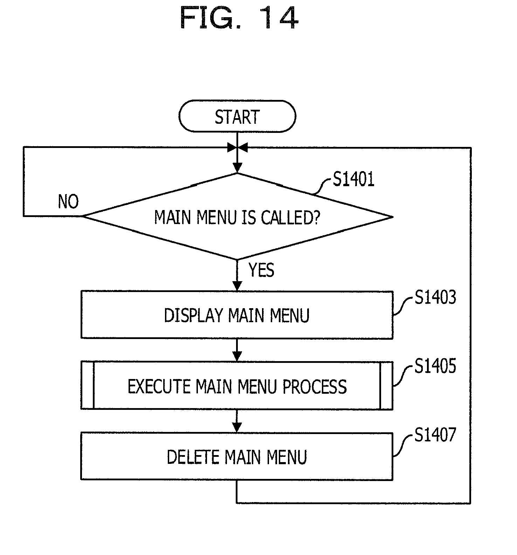

Next, the menu process to be executed by the menu unit 1111 is described. FIG. 14 is a flowchart of the menu process. The menu unit 1111 determines whether or not a call of the main menu has been detected (in S1401). When the operating system 1101 detects the call of the main menu, the menu unit 1111 may receive a notification from the operating system 1101. Alternatively, the menu unit 1111 may detect the call of the main menu. If the menu unit 1111 determines that the call of the main menu is not detected, the process of S1401 is repeated.

If the menu unit 1111 determines that the call of the main menu has been detected, the display unit 1117 displays the main menu (in S1403). In this case, the display unit 1117 reads the main menu table stored in the menu data storage unit 1113 and identifies the names of the application icon files corresponding to the main menu items and the application icon regions corresponding to the main menu items. Then, the display unit 1117 displays, in the application icon regions, image data read from the application icon files for the main menu items.

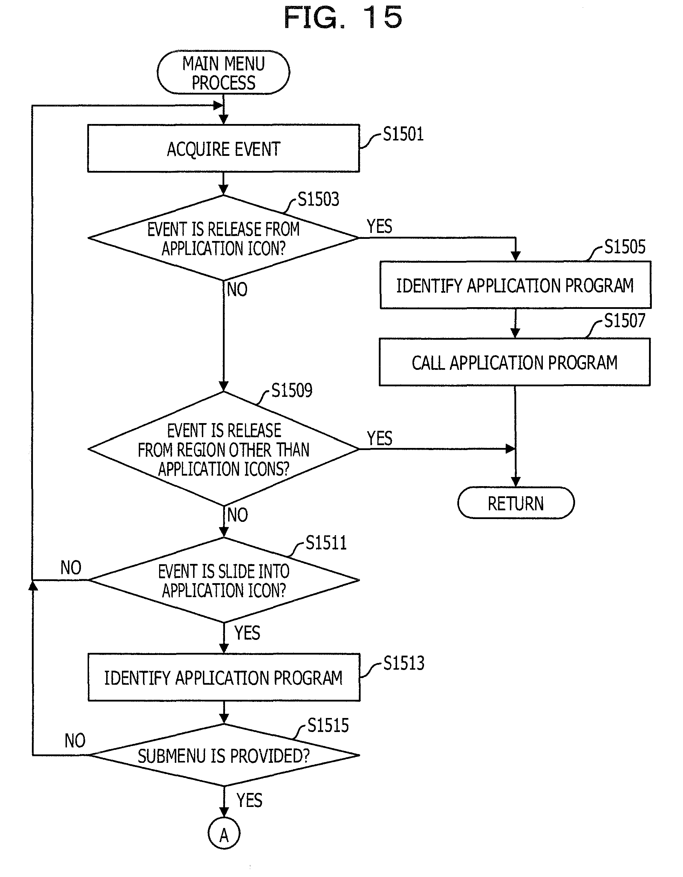

The menu unit 1111 executes a main menu process (in S1405). The main menu process is described with reference to FIG. 15. The receiver 1115 acquires an event from the operating system 1101 (in S1501). In this example, the event related to an operation performed on the touch panel is acquired.

The receiver 1115 determines whether or not the event acquired in S1501 is release from an application icon (in S1503). In this case, the receiver 1115 reads the main menu table stored in the menu data storage unit 1113 and identifies the application icon regions corresponding to the main menu items. If the type of the event is release and a release position is within any of the application icon regions, the receiver 1115 determines that the event is release from the application icon.

If the receiver 1115 determines that the event acquired in S1501 is the release from the application icon, the identifying unit 1119 identifies an application program (in S1505). Specifically, the identifying unit 1119 identifies the name of the application program corresponding to the application icon region identified in S1503.

The calling unit 1121 calls the application program identified (in S1507). For example, the calling unit 1121 provides the name of the application program to the operating system 1101 and instructs the operating system 1101 to activate the application program. Then, the main menu process is terminated and the process proceeds to S1407 illustrated in FIG. 14. The deleting unit 1123 deletes the main menu in S1407 and the process returns to S1401. The operation described with reference to FIG. 3 is achieved by the aforementioned process.

Returning to FIG. 15, if the receiver 1115 determines that the event acquired in S1501 is not the release from the application icon in S1503, the receiver 1115 determines whether or not the event acquired in S1501 is release from a region other than the application icons (in S1509). In this case, the receiver 1115 reads the main menu table stored in the menu data storage unit 1113 and identifies the application icon regions corresponding to the main menu items. If the release position is not within any of the application icon regions, the receiver 1115 determines that the event acquired in S1501 is the release from the region other than the application icons.

If the receiver 1115 determines that the event acquired in S1501 is the release from the region other than the application icons, the main menu process is terminated and the process proceeds to S1407 illustrated in FIG. 14. The deleting unit 1123 deletes the main menu in S1407 and the process returns to S1401. The operation described with reference to FIG. 2 is achieved by the aforementioned process.

Returning to FIG. 15, if the receiver 1115 determines that the event acquired in S1501 is not the release from the region other than the application icons in S1509, the receiver 1115 determines whether or not the event acquired in S1501 is a slide into an application icon (in S1511). In this case, the receiver 1115 reads the main menu table stored in the menu data storage unit 1113 and identifies the application icon regions corresponding to the main menu items. If the type of the event is a slide, and a position to which a user's finger or the like slides is within any of the application icon regions, the receiver 1115 determines that the event acquired in S1501 is a slide into the application icon.

If the receiver 1115 determines that the event acquired in S1501 is not the slide into the application icon, the process returns to S1501, and the aforementioned processes are repeated.

If the receiver 1115 determines that the event acquired in S1501 is the slide into the application icon, the identifying unit 1119 identifies an application program (in S1513). Specifically, the identifying unit 1119 identifies the name of the application program corresponding to the application icon region identified in S1511.

The determining unit 1125 determines whether or not the main menu item selected has a submenu (in S1515). In this case, the determining unit 1125 reads the main menu table stored in the menu data storage unit 1113 and reads a field for information representing whether or not a submenu that corresponds to the application program identified in S1513 is provided. If "provided" is set in the field for the information representing whether or not the submenu that corresponds to the application program identified in S1513 is provided, the determining unit 1125 determines that the main menu item selected has the submenu. If "not provided" is set in the field for the information representing whether or not the submenu that corresponds to the application program identified in S1513 is provided, the determining unit 1125 determines that the main menu item selected does not have the submenu.

If the determining unit 1125 determines that the main menu item selected does not have the submenu, the process returns to S1501, and the aforementioned processes are repeated.

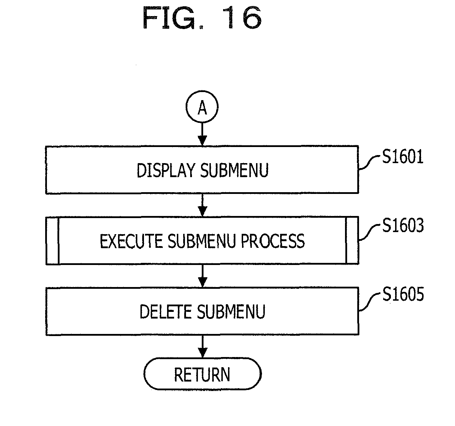

If the determining unit 1125 determines that the main menu item selected has the submenu, the process proceeds to S1601 illustrated in FIG. 16 through a terminal A.

FIG. 16 is a flowchart of the main menu process continued from FIG. 15. The display unit 1117 displays the submenu (in S1601). The display unit 1117 reads a submenu table that is among the submenu tables stored in the menu data storage unit 1113 and corresponds to the main menu item selected. The display unit 1117 identifies the names of functional icon files corresponding to submenu items of the submenu and functional icon regions corresponding to the submenu items. Then, the display unit 1117 displays image data read from the functional icon files in the functional icon regions for the submenu items.

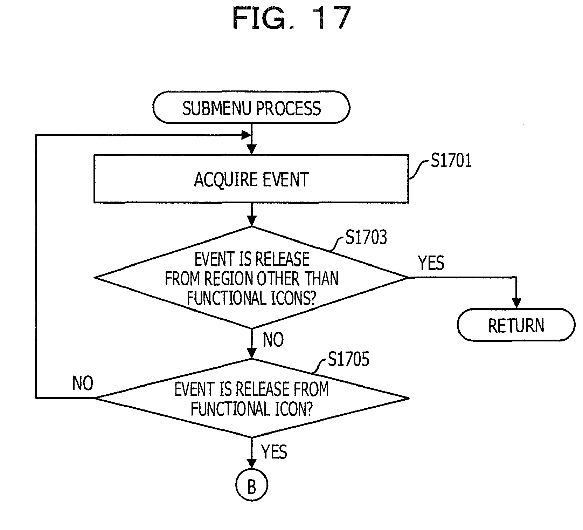

The menu unit 1111 executes a submenu process (in S1603). The submenu process is described with reference to FIG. 17. The receiver 1115 acquires an event from the operating system 1101 (in S1701). In this example, the receiver 1115 acquires the event related to an operation performed on the touch panel.

The receiver 1115 determines whether or not the event acquired in S1701 is release from a region other than the functional icons (in S1703). In this case, the display unit 1117 reads the submenu table that is among the submenu tables stored in the menu data storage unit 1113 and corresponds to the main menu item selected. The receiver 1115 identifies the functional icon regions corresponding to the submenu items. If the type of the event is release, and a release position is not within any of the functional icon regions, the receiver 1115 determines that the event acquired in S1701 is the release from the region other than the functional icons.

If the receiver 1115 determines that the event acquired in S1701 is the release from the region other than the functional icons, the submenu process is terminated and the process proceeds to S1605 illustrated in FIG. 16. In S1605, the deleting unit 1123 deletes the submenu. Then, the main menu process is terminated, and the process proceeds to S1407 illustrated in FIG. 14. The deleting unit 1123 deletes the main menu in S1407, and the process returns to S1401. If a user's finger or the like is released from a region other than the functional icons unlike release from any of the functional icons as illustrated in FIGs. 5 and 6, the submenu and the main menu are closed and the screen returns to the original state.

Returning to FIG. 17, if the receiver 1115 determines that the event acquired in S1701 is not the release from the region other than the functional icons in S1703, the receiver 1115 determines whether or not the event acquired in S1701 is release from a functional icon (in S1705). In this case, the receiver 1115 reads the submenu table stored in the menu data storage unit 1113 and identifies the functional icon regions corresponding to the submenu items. If the type of the event is release, and a release position is within any of the functional icon regions, the receiver 1115 determines that the event acquired in S1701 is release from the functional icon.

If the receiver 1115 determines that the event acquired in S1701 is not the release from the functional icon, the process returns to S1701, and the aforementioned processes are repeated.

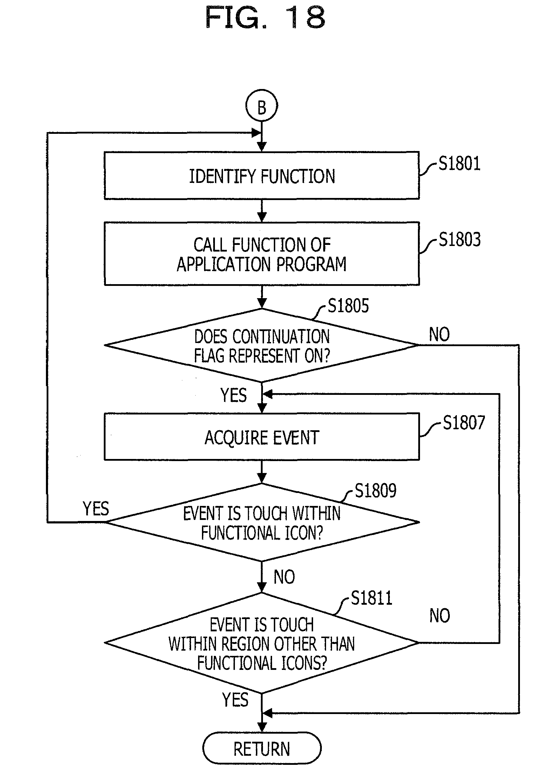

If the receiver 1115 determines that the event acquired in S1701 is the release from the functional icon, the process proceeds to S1801 illustrated in FIG. 18 through a terminal B.

FIG. 18 is a flowchart of the submenu process continued from FIG. 17. The identifying unit 1119 identifies a function (in S1801). Specifically, the identifying unit 1119 identifies the name of the function corresponding to the functional icon region identified in S1705.

The calling unit 1121 calls the function of the application program (in S1803). For example, the calling unit 1121 provides the name of the application program selected and the name of the function to the operating system 1101 and instructs the operating system 1101 to activate the function of the application program. The operation described with reference to FIG. 5 and the operation described with reference to FIG. 6 are achieved by the aforementioned process.

The determining unit 1125 determines whether or not the continuation flag for the submenu item selected represents "ON" (in S1805). In this case, the determining unit 1125 reads the submenu table that is among the submenu tables stored in the menu data storage unit 1113 and corresponds to the main menu item selected. Then, the determining unit 1125 reads a field of a continuation flag corresponding to the function identified in S1801.

If the determining unit 1125 determines that the continuation flag for the submenu item selected does not represent "ON" or represents "OFF", the submenu process is terminated, and the process proceeds to S1605 illustrated in FIG. 16. In S1605, the deleting unit 1123 deletes the submenu. Then, the main menu process is terminated, and the process proceeds to S1407 illustrated in FIG. 14. The deleting unit 1123 deletes the main menu in S1407, and the process returns to S1401. The operation described with reference to FIG. 8 is achieved by the aforementioned process.

Returning to FIG. 18, if the determining unit 1125 determines that the continuation flag for the submenu item selected represents "ON", the submenu and the main menu are not deleted. Thus, the receiver 1115 acquires an event again (in S1807). In this example, the receiver 1115 acquires the event related to an operation performed on the touch panel.

The receiver 1115 determines whether or not the event acquired in S1807 is a touch within a functional icon (in S1809). In this case, the display unit 1117 reads the submenu table that is among the submenu tables stored in the menu data storage unit 1113 and corresponds to the main menu item selected. The receiver 1115 identifies the functional icon regions corresponding to the submenu items. If the type of the event is a touch, and a position at which the user touches the screen is within any of the functional icon regions, the receiver 1115 determines that the event acquired in S1807 is a touch within the functional icon.

If the receiver 1115 determines that the event acquired in S1807 is the touch within the functional icon, the process returns to S1801, and the aforementioned processes are repeated. The operation described with reference to FIG. 9 is achieved by the aforementioned process.

If the receiver 1115 determines that the event acquired in S1807 is not the touch within the functional icon, the receiver 1115 determines whether or not the event acquired in S1807 is a touch within a region other than the functional icons (in S1811). In this case, the display unit 1117 reads the submenu table that is among the submenu tables stored in the menu data storage unit 1113 and corresponds to the main menu item selected. The receiver 1115 identifies the functional icon regions corresponding to the submenu items. If the type of the event is the touch, and a position at which the user touches the screen is not within any of the functional icon regions, the receiver 1115 determines that the event acquired in S1807 is the touch within the region other than the functional icons.

If the receiver 1115 determines that the event acquired in S1807 is the touch within the region other than the functional icons, the submenu process is terminated, and the process proceeds to S1605 illustrated in FIG. 16. In S1605, the deleting unit 1123 deletes the submenu. Then, the main menu is terminated, and the process proceeds to S1407 illustrated in FIG. 14. The deleting unit 1123 deletes the main menu in S1407, and the process returns to S1401. If the user touches a region other than the functional icons unlike the case in which the user touches a region within a functional icon as illustrated in FIGs. 8 and 9, the submenu and the main menu are closed and the screen returns to the original state.

If the receiver 1115 determines that the event acquired in S1807 is not the touch within the region other than the functional icons, the process returns to the process of S1807, and the aforementioned processes are repeated. The description of the submenu process is finished.

As described above, when the submenu process is terminated, the process proceeds to the process of S1605 illustrated in FIG. 16.

Return to the description of the flow of the main menu process illustrated in FIG. 16. When the submenu process is terminated, the deleting unit 1123 deletes the submenu (in S1605).

As described above, when the main menu process is terminated, the process proceeds to the process of S1407 illustrated in FIG. 14.

Return to the description of the flow of the menu process illustrated in FIG. 14. When the main menu process is terminated, the deleting unit 1123 deletes the main menu (in S1407). Then, the process returns to the process of S1401. The description of the menu process is finished.

According to the embodiment, when a functional icon (for example, the icon for the "reproduction" function) that does not cause the main menu and a submenu to continue to be displayed is selected, the menus displayed are deleted. When a functional icon (for example, the icon for the "next tune selection" function) that causes the main menu and a submenu to continue to be displayed is selected, the menus displayed are not deleted. Thus, a certain icon may be continuously selected from a menu that is temporarily used.

Although the embodiment is described above, the disclosure is not limited to the embodiment. For example, the configuration of the aforementioned functional blocks may not match a configuration of actual program modules.

The configuration of the storage regions described above is an example, and the storage regions may not be configured in the aforementioned manner. In each of the flowcharts, processes may be replaced with each other as long as results of the processes do not change. In each of the flowcharts, processes may be executed in parallel.

The embodiment is summarized as follows.

An electronic device according to an aspect includes a storage unit configured to store data that defines, for each of menu items included in a menu, whether or not the menu item causes the menu to continue to be displayed after the menu item is selected, a display unit configured to continuously display the menu when a menu item that defines that the menu continues to be displayed is selected, and a deleting unit configured to delete the displayed menu when a menu item that defines that the menu does not continue to be displayed is selected.

When a menu item (for example, the icon for the "reproduction" function) that defines that the menu does not continue to be displayed is selected, the menu displayed is deleted. When a menu item (for example, the icon for the "next tune selection" function) that defines that the menu continues to be displayed is selected, the menu displayed is not deleted. Thus, a certain menu item may be continuously selected from a menu temporarily used.

A program that causes a computer to execute the process that is to be executed by the electronic device may be generated and stored in a computer-readable storage medium such as a flexible disk, a CD-ROM, a magneto-optical disc, a semiconductor memory, or a hard disk or a storage device. Intermediate results of the process are temporarily stored in a storage device such as a main memory in general.

## Claims

1. An electronic device comprising:
a display unit that display a menu;
a determination unit that determine whether or not a menu item selected from among menu items included in the menu defines that the menu continues to be displayed when the menu item is selected;
a maintenance unit that maintain a state in which the menu is displayed when the determination unit determines that the selected menu item defines that the menu continues to be displayed; and
a deletion unit that deletes the displayed menu when the determination unit determines that the selected menu item defines that the menu does not continue to be displayed.

2. The electronic device according to claim 1, further comprising:
a memory configured to store data that defines, for each of the menu items included in the menu, whether or not the each of the menu items causes the menu to continue to be displayed after the each of the menu items is selected, and
wherein the determination unit determines whether or not the selected menu item defines that the menu continues to be displayed based on the stored data.

3. A machine readable medium storing a program that, when executed by a processor, causes the processor to perform operations comprising:
a process of determining whether or not a menu item selected from among menu items included in a menu that is displayed defines that the menu continues to be displayed when the menu item is selected; and
a process of maintaining a state in which the menu is displayed when the processor determines that the selected menu item defines that the menu continues to be displayed and deleting the displayed menu when the processor determines that the selected menu item defines that the menu does not continue to be displayed.

4. A menu control method comprising:
determining, by a processor, whether or not a menu item selected from among menu items included in a menu that is displayed defines that the menu continues to be displayed when the menu item is selected;
maintaining a state in which the menu is displayed when the determining determines that the selected menu item defines that the menu continues to be displayed; and
deleting the displayed menu when the determining determines that the selected menu item defines that the menu does not continue to be displayed.
